# FASCICULE DE BREVET EUROPEEN

(11) **EP 0 805 078 B1**
(45) Date de publication et mention de la délivrance du brevet: **06.12.2000**
(21) Numéro de dépôt: 97106599.0
(22) Date de dépôt: 22.04.1997
(51) Int. Cl.: B60R 25/02, E05B 47/00

(54) **Dispositif de verrouillage motorisé pour véhicule automobile comportant des moyens perfectionnés de limitation de la course du pêne**
Angetriebene Verriegelungsvorrichtung für Fahrzeuge mit verbesserten Mitteln zur Begrenzung der Bewegung eines Riegels
Motorised locking device for a vehicle having improved bolt movement limiting means

(30) Priorité: 29.04.1996 FR 9605484
(43) Date de publication de la demande: 05.11.1997
(73) Titulaire: VALEO SECURITE HABITACLE, 94042 Créteil Cedex (FR)
(72) Inventeur: Peyre, Jean, 78800 Houilles (FR); Demouy, Olivier, 75012 Paris (FR); Humbert, Arnaud, 94000 Creteil (FR); Alliot, Pascal, 78710 Rosny sur Seine (FR)
(74) Mandataire: Lenne, Laurence

(56) Documents cités:
- DE-A- 3 631 163
- DE-C- 3 739 172

## Description

L'invention concerne un dispositif de verrouillage motorisé pour véhicule automobile, comportant des moyens perfectionnés de limitation de la course du pêne.

L'invention concerne plus particulièrement un dispositif de verrouillage motorisé pour l'immobilisation en rotation d'une colonne de direction de véhicule automobile dont la colonne comporte un arbre de transmission muni de logements, du type dans lequel un pêne est susceptible de coulisser entre une position verrouillée basse, dans laquelle il est reçu au moins partiellement dans un logement de l'arbre pour immobiliser celui-ci en rotation autour de son axe, et une position déverrouillée haute dans laquelle il est dégagé des logements, du type dans lequel le pêne est commandé par un moteur électrique par l'intermédiaire d'une tige filetée d'entraînement qui est parallèle à la direction de coulissement du pêne et sur laquelle est monté un coulisseau de commande taraudé qui est immobilisé en rotation de sorte qu'un mouvement de rotation de la tige provoque un mouvement de translation du coulisseau selon l'axe de la tige, et du type dans lequel le coulisseau est susceptible de coopérer avec une butée de verrouillage ou avec une butée de déverrouillage du pêne pour déplacer le pêne respectivement vers ses positions verrouillées et déverrouillées.

Dans de tels dispositifs de verrouillage, les positions verrouillées et déverrouillées du pêne sont généralement déterminées par un simple arrêt du moteur électrique qui entraîne la tige filetée.

Cela peut être par exemple réalisé en disposant des interrupteurs qui sont actionnés par exemple par une came liée au pêne, et qui envoient des impulsions à un circuit électronique chargé de la commande du moteur, lequel circuit coupe alors l'alimentation électrique du moteur.

Toutefois, entre l'instant de la coupure d'alimentation du moteur et l'arrêt effectif de la rotation de l'arbre du moteur électrique, il s'écoule un certain temps difficilement -prévisible et qui dépend notamment de l'inertie des pièces mobiles du moteur, et des divers frottements qui affectent le dispositif de verrouillage.

De la sorte, il en résulte une incertitude sur la position effective, déverrouillée, du pêne qui est d'autant plus gênante que cette position varie à chaque fois que le moteur est arrêté.

Aussi, l'invention a pour but de proposer une conception d'un dispositif de verrouillage qui permette de maîtriser avec suffisamment de précision la position dans laquelle le pêne s'est arrêté, et surtout d'assurer de manière certaine que cette position se trouve dans un intervalle déterminé le plus petit possible.

Le document DE 36 31 163 A décrit un dispositif de verrouillage motorisé pour portes de véhicule du type vu précédemment et qui correspond au préambule de la revendication 1 de la présente demande.

Néanmoins, dans le cas d'un verrouillage de colonne de direction, il est nécessaire que le pêne soit forcé vers sa position de verrouillage.

Dans ce but, l'invention propose un dispositif de verrouillage motorisé pour l'immobilisation en rotation d'une colonne de direction de véhicule automobile dont la colonne de direction comporte un arbre de transmission muni de logements, du type dans lequel un pêne est susceptible de coulisser entre une position verrouillée basse, dans laquelle il est reçu au moins partiellement dans un logement de l'arbre pour immobiliser celui-ci en rotation autour de son axe, et une position déverrouillée haute dans laquelle il est dégagé des logements, du type dans lequel le pêne est commandé par un moteur électrique par l'intermédiaire d'une tige filetée d'entraînement qui est parallèle à la direction de coulissement du pêne et sur laquelle est monté un coulisseau de commande taraudé qui est immobilisé en rotation de sorte qu'un mouvement de rotation de la tige provoque un mouvement de translation du coulisseau selon l'axe de la tige, et du type dans lequel le coulisseau est susceptible de coopérer avec une butée de verrouillage ou avec une butée de déverrouillage du pêne pour déplacer le pêne respectivement vers ses positions verrouillées et déverrouillées, la tige comportant un tronçon fileté qui est prolongé au moins à l'une de ses extrémités axiales par un tronçon de diamètre réduit de la tige, la tige filetée étant entraînée selon un premier sens de rotation, le coulisseau étant susceptible de coulisser axialement en direction du tronçon de diamètre réduit de la tige jusqu'à une position débrayée dans laquelle son taraudage est dégagé du tronçon fileté de sorte que la poursuite du mouvement de rotation selon le premier sens de la tige est sans effet sur le coulisseau qui occupe alors une première position extrême correspondant à l'une des positions verrouillées ou déverrouillées du coulisseau, le coulisseau étant dans sa première position extrême, il est prévu des moyens qui le sollicitent élastiquement en appui axial contre le tronçon fileté de la tige, le tronçon fileté de la tige étant agencé en dessous du tronçon de diamètre réduit, la position débrayée du coulisseau correspondant à la position de déverrouillage du pêne , et un ressort de compression étant agencé entre une face supérieure du pêne et un collet radial agencé sur la tige d'entraînement au-dessus du tronçon de diamètre réduit pour plaquer élastiquement l'extrémité inférieure du taraudage du coulisseau en appui axial contre l'extrémité supérieure du tronçon fileté, caractérisé en ce qu'un élément déformable élastiquement est interposé entre le coulisseau et la butée de verrouillage, et en ce que l'élément est déformé élastiquement lorsque le coulisseau est entraîné vers sa position extrême correspondant à la position de verrouillage du pêne et que le pêne n'est pas en regard d'un des logements de l'arbre.

Selon d'autres caractéristiques de l'invention :
- l'élément déformable élastiquement force le pêne vers sa position de verrouillage à l'intérieur d'un logement lorsque l'arbre de transmission de la colonne est tourné autour de son axe de manière à amener un logement de l'arbre en regard du pêne ;
- le pêne comporte une fenêtre délimitée par une plaque supérieure et une plaque inférieure qui sont perpendiculaires au déplacement du pêne et qui sont chacune munie d'un perçage pour le passage de la tige filetée d'entraînement, le coulisseau est reçu entre les deux plaques supérieures et inférieures de telle sorte que les faces en vis à vis, respectivement inférieures et supérieures de ces plaques forment les butées, respectivement de déverrouillage et de verrouillage, du pêne qui coopèrent respectivement avec les faces supérieures et inférieures du coulisseau, et un ressort de compression est agencé entre la plaque inférieure du pêne et la face inférieure du coulisseau.

D'autres caractéristiques et avantages de l'invention apparaîtront à la lecture de la description détaillée qui suit pour la compréhension de laquelle on se reportera aux dessins annexés dans lesquels :
- les figures 1A, 1B et 1C sont des vues schématiques des principaux composants d'un dispositif de verrouillage mettant en oeuvre l'invention, et qui est illustré respectivement en position déverrouillée du pêne, en position de préverrouillage du pêne, et en position verrouillée du pêne ;
- la figure 2 est une vue en perspective de la tige filetée d'entraînement du dispositif de la figure 1 ;
- la figure 3 est une vue en perspective du pêne du dispositif de la figure 1, et
- la figure 4 est une vue en coupe longitudinale agrandie d'un détail de la figure 1 illustrant la position débrayée du coulisseau lorsque le pêne est en position déverrouillée.

On a représenté sur les figures un dispositif de verrouillage 10 volontairement simplifié dans le but de mieux illustrer la présente invention.

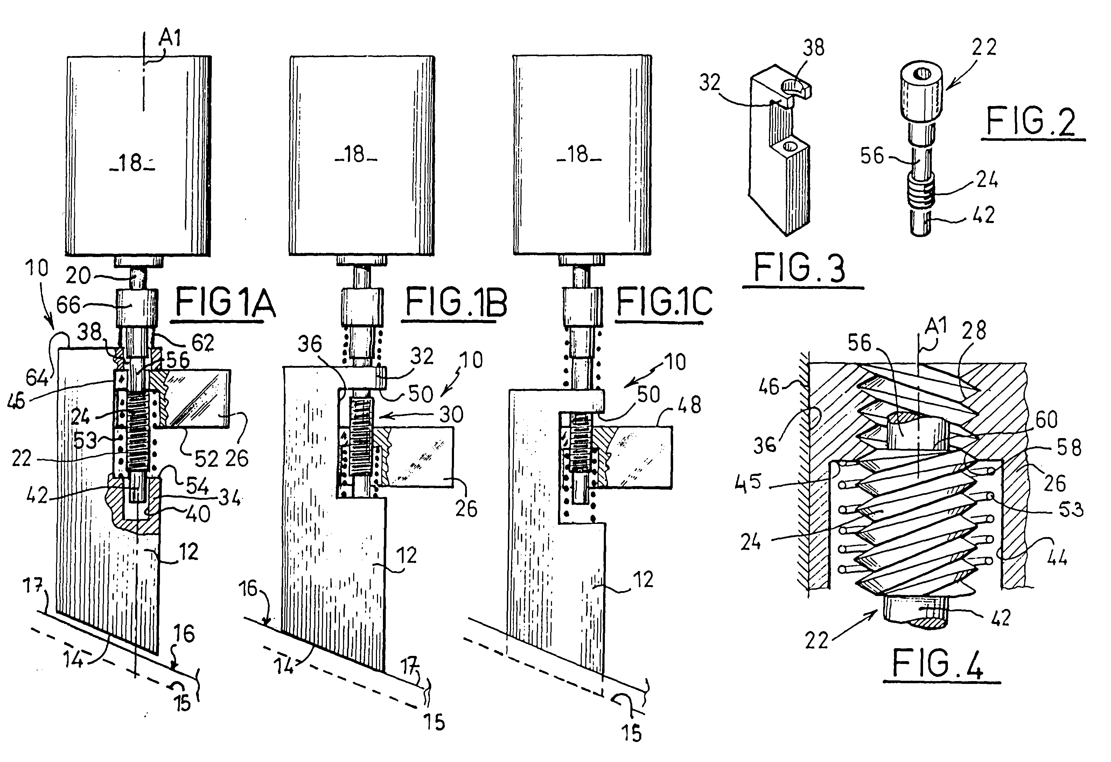

Ce dispositif de verrouillage 10 comporte un pêne 12 qui est susceptible de coulisser longitudinalement entre une position déverrouillée haute, représentée à la figure 1A, et une position verrouillée basse, représentée à la figure 1C et dans laquelle l'extrémité inférieure 14 du pêne 12 est reçue dans un logement 15 formé dans la surface latérale 17 d'un arbre de colonne de direction 16 afin d'empêcher celui-ci de tourner autour de son axe (non représenté) qui, dans l'exemple de réalisation représenté sur les figures, est oblique par rapport à la direction longitudinale de coulissement du pêne 14.

Le dispositif de verrouillage 10 est du type motorisé et comporte à cet effet un moteur électrique 18, qui dans l'exemple de réalisation représenté, est agencé au-dessus du pêne 12, l'axe A1 de l'arbre moteur 20 du moteur 18 étant agencé longitudinalement parallèlement à l'axe du déplacement du pêne 12.

Il est prévu des moyens de guidage (non représentés) du pêne 12 qui se présentent généralement sous la forme d'un boîtier fixé à un élément fixe (non représenté) de la structure du véhicule.

L'arbre moteur 20 du moteur 18 est prolongé longitudinalement vers le bas en direction de l'arbre 16 de la colonne de direction par une tige d'entraînement 22 qui comporte un tronçon fileté 24 sur lequel est monté un coulisseau 26 muni d'un taraudage 28 plus particulièrement visible sur la figure 4.

Le pêne 12 comporte une fenêtre ou encoche transversale 30 qui s'étend longitudinalement entre deux plaques transversales supérieures 32 et inférieures 34. La fenêtre 30 débouche latéralement selon trois directions perpendiculaires à la direction longitudinales de coulissement du pêne 12 et elle délimite une face longitudinale verticale 36 entre les deux plaques 32, 34 à l'intérieur du pêne 12.

La fenêtre 30 est destinée à permettre un déplacement relatif selon la direction longitudinale du coulisseau 26 par rapport au pêne 12 et, dans l'exemple de réalisation ici représenté, il a été choisi de disposer la tige filetée 22 de telle sorte qu'elle traverse un perçage longitudinal 38 de la plaque supérieure 32 et qu'elle s'étende longitudinalement dans la fenêtre 30.

La plaque inférieure 34 est percée d'un trou longitudinal borgne 40 dans lequel est reçue l'extrémité inférieure 42 de la tige filetée 22 lorsque le pêne 12 est en position déverrouillée.

Comme on peut le voir sur les figures, le taraudage 28 du coulisseau 26 ne s'étend que sur une partie supérieure du coulisseau 26 et il est prolongé axialement vers le bas par un alésage de plus grand diamètre 44 qui est destiné au passage de l'extrémité inférieure de la tige 22.

Le coulisseau 26 comporte une face latérale 46 qui est agencée en regard de la face longitudinale 36 de la fenêtre 30, en appui contre cette face longitudinale 36, de sorte que le pêne 12 forme un blocage en rotation du coulisseau 26 autour de l'axe A1 de la tige filetée 22.

Ainsi, lorsque la tige filetée 22 est entraînée en rotation autour de son axe par le moteur 18, le coulisseau 26 est animé d'un mouvement de translation longitudinale dont le sens dépend du sens de rotation du moteur 18.

Le coulisseau 26 est susceptible de provoquer le déplacement du pêne entre ses positions déverrouillées et verrouillées. En effet, lorsque le coulisseau 26 se déplace axialement vers le haut, par rapport à la tige filetée 22, il est susceptible de venir en appui par sa face supérieure 48 contre la face inférieure 50 de la plaque supérieure 32 du pêne 12 et il est alors susceptible d'entraîner avec lui le pêne 12.

Il en est de même lorsque la face inférieure 52 du coulisseau 26 vient en contact avec la face supérieure 54 de la plaque inférieure 40 du pêne 12.

Ainsi, les plaques 32 et 34 avec leurs faces en vis à vis respectivement inférieures à 50 et supérieures à 54 forment des butées, respectivement de déverrouillage et de verrouillage du pêne 12, coopérant respectivement avec les faces supérieures 48 et inférieures 53 du coulisseau 26.

Un ressort de compression 53 est agencé entre le fond 45 de l'alésage 44 du coulisseau 26 et la face supérieure 54 de la plaque inférieure 40 du pêne 12 si bien que lorsque le coulisseau 26 est animé d'un mouvement axial vers le bas, il est susceptible d'entraîner avec lui le pêne 12 vers sa position verrouillée.

Si l'extrémité 14 du pêne 12 n'est pas en regard d'un des logements 15 de l'arbre 16 de la colonne de direction, lorsque le coulisseau se déplace axialement vers le bas, l'extrémité inférieure 14 du pêne 12 arrive en butée contre la face latérale 17 de l'arbre 16 et ne peut continuer sa course (figure 1B. Avantageusement, grâce à l'interposition du ressort de compression 53, le coulisseau 26 peut poursuivre son déplacement vers le bas, jusqu'à sa position qui correspond à la position normale verrouillée du pêne 12, en comprimant le ressort 53.

Il suffit alors de faire pivoter l'arbre 16 de la colonne de direction autour de son axe de manière à amener l'un de ses logements 15 en regard de l'extrémité 14 du pêne 12 pour que le pêne 12, sous l'effet de l'action du ressort de compression 53, s'engage dans le logement 15 afin d'immobiliser l'arbre 16 en rotation (figure 1C).

Conformément aux enseignements de l'invention, il est prévu des moyens perfectionnés pour déterminer de manière précise et fiable la position déverrouillée du pêne 12 par rapport à la tige 22.

A cet effet, le tronçon fileté 24 est prolongé à son extrémité supérieure par un tronçon lisse 56 dont le diamètre est réduit de manière à être inférieur au diamètre de tête des filets du taraudage 28 du coulisseau 26.

Ainsi, lorsque le moteur 18 est commandé de manière à faire remonter le coulisseau le long du tronçon fileté 24 de la tige d'entraînement 22, il arrive un moment où l'extrémité inférieure 58 du taraudage 28 arrive au niveau de l'extrémité supérieure 60 du tronçon fileté 24.

Le taraudage 28 s'étend alors en regard du tronçon supérieur lisse de diamètre réduit 56 de la tige 22, si bien qu'il ne peut plus y avoir engrènement entre la tige 22 et le coulisseau 26, et que si le moteur 18 est commandé plus longtemps dans le sens qui tend à provoquer un mouvement du coulisseau 26 vers le haut, celui-ci ne progressera plus car il est alors dans une position débrayée, en appui longitudinalement vers le bas contre l'extrémité supérieure 58 du tronçon fileté 24.

De la sorte, l'incertitude sur la position du coulisseau 26 par rapport à la tige 22 ne peut être supérieure à la valeur d'un pas du filetage, et ceci quelle que soit la position angulaire d'arrêt du moteur 18.

Un ressort de compression 62 est interposé entre la face supérieure 64 du pêne 12 et un collet radial 66 agencé sur la tige 22 au-dessus du tronçon de diamètre réduit 56.

Ainsi, lorsque le coulisseau 26 est dans sa position débrayée représentée à la figure 1A, le ressort 62 est plaque d'une part le pêne 12 axialement vers le bas contre le coulisseau 26 et, d'autre part, l'extrémité inférieure 58 du taraudage 28 du coulisseau 26 contre l'extrémité supérieure 60 du tronçon fileté 24 de la tige 22.

De la sorte lorsque le moteur 18 est commandé en rotation selon le sens qui tend à faire descendre le coulisseau 26 vers le bas, on assure un engrènement sûr et fiable du taraudage 28 et du tronçon fileté 24 avant que l'arbre 20 du moteur 18 n'ait effectué un tour complet.

Une fois l'engrènement réalisé, le coulisseau 26 progresse axialement vers le bas le long du tronçon fileté 24.

Les deux ressorts de compression 53, 62 qui sont interposés entre le pêne 12, et respectivement, le coulisseau 26 et le collet radial 66 ont alors tous les deux pour effet de pousser le pêne 12 axialement vers le bas.

Ceci est particulièrement avantageux dans le cas représenté à la figure 1B où le pêne 12 n'est pas en regard d'un logement 15. En effet, l'action combinée des deux ressorts s'ajoute pour assurer un engagement rapide de l'extrémité inférieure 14 du pêne 12 dans un logement 15 lorsqu'ils sont mis en regard l'un de l'autre.

Dans l'exemple de réalisation qui est représenté sur les figures, la position verrouillée du pêne 12 qui est représentée à la figure 1C est déterminée par l'appui de l'extrémité axiale inférieure 14 du pêne 12 contre le fond du logement 15.

Ainsi, lorsque le pêne est en position verrouillée, il existe un jeu entre la face inférieure 50 de la plaque supérieure 32 du pêne 12 et la face supérieure 48 du coulisseau 26.

On peut toutefois prévoir que cette position verrouillée du pêne 12 soit déterminée parla position du coulisseau 26 auquel cas il faut prévoir des logements 15 plus profonds dans l'arbre, les ressorts de compression 53, 62 combinant alors leurs actions pour plaquer la plaque supérieure 32 du pêne 12 contre la face supérieure 48 du coulisseau 26.

Dans ce cas, on peut déterminer la position inférieure du coulisseau 26 et donc la position verrouillée du pêne 12, en prévoyant un dispositif similaire à celui décrit pour la détermination de la position débrayée supérieure du coulisseau 26.

## Revendications

1. Dispositif de verrouillage motorisé pour l'immobilisation en rotation d'une colonne de direction de véhicule automobile dont la colonne de direction comporte un arbre de transmission (16) muni de logements, du type dans lequel un pêne (12) est susceptible de coulisser entre une position verrouillée basse, dans laquelle il est reçu au moins partiellement dans un logement (15) de l'arbre (16) pour immobiliser celui-ci en rotation autour de son axe, et une position déverrouillée haute dans laquelle il est dégagé des logements, du type dans lequel le pêne (12) est commandé par un moteur électrique (18) par l'intermédiaire d'une tige filetée (22) d'entraînement qui est parallèle à la direction de coulissement du pêne (12) et sur laquelle est monté un coulisseau de commande (26) taraudé qui est immobilisé en rotation de sorte qu'un mouvement de rotation de la tige provoque un mouvement de translation du coulisseau selon l'axe de la tige, et du type dans lequel le coulisseau est susceptible de coopérer avec une butée de verrouillage (32) ou avec une butée de déverrouillage (34) du pêne (12) pour déplacer le pêne (12) respectivement vers ses positions verrouillées et déverrouillées, la tige (22) comportant un tronçon fileté (24) qui est prolongé au moins à l'une de ses extrémités axiales par un tronçon de diamètre réduit (56) de la tige (22), la tige filetée (22) étant entraînée selon un premier sens de rotation, le coulisseau (26) étant susceptible de coulisser axialement en direction du tronçon de diamètre réduit (56) de la tige (22) jusqu'à une position débrayée dans laquelle son taraudage (28) est dégagé du tronçon fileté (24) de sorte que la poursuite du mouvement de rotation selon le premier sens de la tige (22) est sans effet sur le coulisseau (26) qui occupe alors une première position extrême correspondant à l'une des positions verrouillées ou déverrouillées du coulisseau (26), le coulisseau (26) étant dans sa première position extrême, il est prévu des moyens (62) qui le sollicitent élastiquement en appui axial contre le tronçon fileté (24) de la tige (22), le tronçon fileté (24) de la tige (22) étant agencé en dessous du tronçon de diamètre réduit (56), la position débrayée du coulisseau (26) correspondant à la position de déverrouillage du pêne (12), et un ressort de compression (62) étant agencé entre une face supérieure (64) du pêne (12) et un collet radial (66) agencé sur la tige d'entraînement (22) au-dessus du tronçon de diamètre réduit (56) pour plaquer élastiquement l'extrémité inférieure (58) du taraudage (28) du coulisseau (26) en appui axial contre l'extrémité supérieure (60) du tronçon fileté (24), caractérisé en ce qu'un élément déformable élastiquement (53) est interposé entre le coulisseau (26) et la butée de verrouillage (34), et en ce que l'élément (53) est déformé élastiquement lorsque le coulisseau (26) est entraîné vers sa position extrême correspondant à la position de verrouillage du pêne (12) et que le pêne (12) n'est pas en regard d'un des logements de l'arbre (16).

2. Dispositif selon la revendication 1, caractérisé en ce que l'élément déformable élastiquement (53) force le pêne (12) vers sa position de verrouillage à l'intérieur d'un logement lorsque l'arbre de transmission (16) de la colonne est tourné autour de son axe de manière à amener un logement de l'arbre en regard du pêne (12).

3. Dispositif de verrouillage selon la revendication 2, caractérisé en ce que le pêne (12) comporte une fenêtre (30) délimitée par une plaque supérieure (32) et une plaque inférieure (34) qui sont perpendiculaires au déplacement du pêne (12) et qui sont chacune munie d'un perçage pour le passage de la tige filetée d'entraînement (22), en ce que le coulisseau (26) est reçu entre les deux plaques supérieures (32) et inférieures (34) de telle sorte que les faces en vis à vis, respectivement inférieures (50) et supérieures (54) de ces plaques (32, 34) forment les butées, respectivement de déverrouillage et de verrouillage, du pêne (12) qui coopèrent respectivement avec les faces supérieures (48) et inférieures (52) du coulisseau (26) et en ce qu'un ressort de compression (53) est agencé entre la plaque inférieure ( 34) du pêne (12) et la face inférieure (52) du coulisseau (26).

## Patentansprüche

1. Durch einen Motor angetriebene Verriegelungsvorrichtung zur Blockierung der Drehung der Lenksäule eines Kraftfahrzeuges, wobei die Lenksäule eine Antriebswelle (16) mit Aufnahmen umfaßt; daß die Verriegelungsvorrichtung ein Sperrglied (12) enthält, welches zwischen einer unteren Verriegelungsstellung, in der es wenigstens teilweise von einer Aufnahme (15) der Welle (16) aufgenommen wird, um diese hinsichtlich der Drehung um ihre Achse festzusetzen, und einer oberen Entriegelungsstellung, in welcher es aus den Aufnahmen herausgezogen ist, verschiebbar ist; daß das Sperrglied (12) von einem Elektromotor (18) über einen Schraubenspindelantrieb (22) betätigbar ist, der parallel zur Verschieberichtung des Sperrgliedes (12) angeordnet ist und auf dem ein mit einem Gewinde versehener Betätigungsschieber (26) angeordnet ist, derart, daß eine Drehbewegung der Spindel eine Verschiebung des Schiebers entlang der Achse der Spindel hervorruft; und daß der Schieber mit einem Verriegelungsanschlag (32) oder einem Entriegelungsanschlag (34) des Sperrgliedes (12) zusammenwirkt, um das Sperrglied (12) entsprechend in seine Verriegelungs- und Entriegelungsstellung zu verschieben, wobei die Schraubenspindel (22) einen Gewindeabschnitt (24) umfaßt, der sich mindestens an einem seiner axialen Enden bis zu einem Abschnitt (56) der Schraubenspindel (22) mit reduziertem Durchmesser erstreckt, daß die Schraubenspindel (22) in einer ersten Drehrichtung drehbar ist, daß der Schieber (26) axial in Richtung des Abschnittes (56) mit reduziertem Durchmesser der Schraubenspindel (22) bis in eine ausgerückte Stellung verschiebbar ist, in der sein Innengewinde (28) von dem Gewindeabschnitt (24) freigegeben ist, derart, daß eine weitere Drehung der Spindel (22) in der ersten Drehrichtung ohne Wirkung auf den Schieber (26) ist, der daher eine erste Endlage einnimmt, die einer der Verriegelungs- oder Entriegelungsstellungen des Schiebers (26) entspricht, daß der Schieber (26) in seiner ersten Endlage durch Mittel (62) elastisch belastet wird, die ihn gegen den Gewindeabschnitt (24) der Spindel (22) drücken, wobei der Gewindeabschnitt (24) der Spindel (22) unterhalb des Abschnittes (56) mit reduziertem Durchmesser angeordnet ist, daß die ausgerückte Stellung des Schiebers (26) der Entriegelungsstellung des Sperrgliedes (12) entspricht und daß eine Druckfeder (62) zwischen einer oberen Fläche (64) des Sperrgliedes (12) und einem radialen Bundring (66) angeordnet ist, der sich auf der Spindel (22) oberhalb des Abschnittes (56) mit reduziertem Durchmesser befindet, um das untere Ende (58) des Innengewindes (28) des Schiebers (26) axial gegen das obere Ende (60) des Gewindeabschnittes (24) zu belasten, dadurch gekennzeichnet, daß ein elastisch-deformierbares Element (53) zwischen dem Schieber (26) und dem Verriegelungsanschlag (34) angeordnet ist, und daß das Element (53) elastisch deformiert ist, wenn der Schieber (26) sich in seiner Endlage befindet, die der Verriegelungsstellung des Sperrgliedes (12) entspricht und wenn das Sperrglied sich in keiner der Aufnahmen der Welle (16) befindet.

2. Vorrichtung nach Anspruch 1, dadurch gekennzeichnet, daß das elastisch-deformierbare Element (53) das Sperrglied (12) in seine Verriegelungsstellung in das Innere einer Aufnahme drückt, wenn die Antriebswelle (16) der Lenksäule um ihre Achse gedreht wird, um hinsichtlich des Sperrgliedes (12) eine Aufnahme durch die Welle zu erreichen.

3. Verriegelungsvorrichtung nach Anspruch 2, dadurch gekennzeichnet, daß das Sperrglied (12) ein durch eine obere Platte (32) und eine untere Platte (34) begrenztes Fenster (30) umfaßt, die senkrecht zur Verschiebung des Sperrgliedes (12) angeordnet sind und die jeweils mit einer Bohrung zur Hindurchführung der Schraubenspindel (22) versehen sind, daß sich der Schieber (26) zwischen der oberen und unteren Platte (32, 34) befindet, derart, daß die gegenüberliegenden unteren und oberen Flächen (50, 54) dieser Platten (32, 34) die Verriegelungs- und Entriegelungsanschläge des Sperrgliedes (12) bilden, die entsprechend mit der oberen Fläche (48) und unteren Fläche (52) des Schiebers (26) zusammenwirken und daß eine Druckfeder (53) zwischen der unteren Platte (34) des Sperrgliedes (12) und der unteren Fläche (52) des Schiebers (26) angeordnet ist.

## Claims

1. A motorised locking device for preventing rotation of a motor vehicle steering column in which the steering column comprises a transmission shaft (16) formed with recesses, of the type in which a bolt (12) is arranged to slide between a lower, locked, position in which it is received at least partially in a recess (15) of the shaft (16) so as to immobilise the latter against rotation about its axis, and an unlocked, upper, position in which it is disengaged from the recesses, of the type in which the bolt (12) is controlled by an electric motor (18)through an interposed threaded actuating rod (22) which is parallel to the direction of sliding of the bolt (12), and on which there is mounted a threaded control slider (26) which is immobilised against rotation so that a rotational movement of the rod causes the slider to move in a straight line along the axis of the rod, and of the type in which the slider is arranged to cooperate with a locking abutment (32) or with an unlocking abutment (34) of the bolt (12) so as to displace the bolt (12) towards its locked and unlocked positions respectively, the rod (22) having a threaded portion (24) which is extended at least one of its axial ends by a portion (56) of the rod (22) having a reduced diameter, the threaded rod (22) being driven in a first direction of rotation, the slider (26) being arranged to slide axially towards the portion (56) of the rod (22) having the reduced diameter, to a disengaged position in which its thread (28) is disengaged from the threaded portion (24), whereby continued rotational movement of the rod (22) has no effect on the slider (26), which then occupies a first end position corresponding to either the locked position or the unlocked position of the slider (26), and means (62) are provided which urge the slider (26), the latter being in its first end position, elastically into axial abutment against the threaded portion (24) of the rod (22), the threaded portion (24) of the rod (22) being disposed below the portion (56) having the reduced diameter, the disengaged position of the slider (26) corresponding to the unlocked position of the bolt (12), and a compression spring (62) being arranged between an upper face (64) of the bolt (12) and a radial collar (66) disposed on the actuating rod (22) above the portion (56) having the reduced diameter, so as to urge the lower end (58) of the thread (28) of the slider (26) elastically into axial abutment against the upper end (60) of the threaded portion (24), characterised in that an elastically deformable element (53) is interposed between the slider (26) and the locking abutment (34), and in that the element (53) is elastically deformed when the slider (26) is driven towards its end position corresponding to the locking position of the bolt (12) and when the bolt (12) is out of alignment with one of the recesses in the shaft (16).

2. A device according to Claim 1, characterised in that the resiliently deformable element (53) forces the bolt (12) towards its locking position within a recess when the transmission shaft (16) of the steering column is turned about its axis so as to put a recess in the shaft in alignment with the bolt (12).

3. A locking device according to Claim 2, characterised in that the bolt (12) includes a window (30) defined by an upper plate element (32) and a lower plate element (34) which are at right angles to the displacement of the bolt (12), and each of which is formed with a hole for passage of the threaded actuating rod (22), in that the slider (26) is received between the said upper plate element (32) and lower plate element (34) so that the opposed faces consisting respectively of the lower face (50) and upper face (54) of the said plate elements (32, 34) constitute an unlocking abutment and a locking abutment respectively for the bolt (12), which are in respective cooperation with the upper face (48) and lower face (52) of the slider (26), and in that a compression spring (53) is arranged between the lower plate element (34) of the bolt (12) and the lower face (52) of the slider (26).
